(19) Europäisches Patentamt
European Patent Office
Office européen des brevets

(11) Veröffentlichungsnummer: **0 039 834**
**B1**

# (12) EUROPÄISCHE PATENTSCHRIFT

(45) Veröffentlichungstag der Patentschrift: **14.12.83**

(21) Anmeldenummer: **81103224.2**

(22) Anmeldetag: **29.04.81**

(51) Int. Cl.³: **C 08 G 18/18,** C 08 G 18/20, C 08 G 18/32, C 08 G 18/80, C 08 G 18/10

(54) **Verfahren zur Herstellung von Polyharnstoffen.**

(30) Priorität: **10.05.80 DE 3018023**

(43) Veröffentlichungstag der Anmeldung: **18.11.81 Patentblatt 81/46**

(45) Bekanntmachung des Hinweises auf die Patenterteilung: **14.12.83 Patentblatt 83/50**

(84) Benannte Vertragsstaaten: **DE FR GB IT**

(56) Entgegenhaltungen:
**FR - A - 2 144 717**
**FR - A - 2 391 235**

(73) Patentinhaber: **BAYER AG, Zentralbereich Patente, Marken und Lizenzen, D-5090 Leverkusen 1, Bayerwerk (DE)**

(72) Erfinder: **Wellner, Wolfgang, Dr., Hahnenweg 8, D-5000 Köln 80 (DE)**
Erfinder: **Botta, Artur, Dr., Buschstrasse 149, D-4150 Krefeld 1 (DE)**
Erfinder: **Gruber, Hermann, Dr., Paul-Klee-Strasse 87, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Verfahren zur Herstellung von Polyharnstoffe

Die Erfindung betrifft ein neues Verfahren zur Herstellung von Polyharnstoffen durch Umsetzung von blockierten Isocyanaten mit mindestens zwei primäre und/oder sekundäre Aminogruppen aufweisenden organischen Verbindungen unter Verwendung von nachstehend näher beschriebenen Guanidinen als Katalysatoren für die Polykondensationsreaktion.

Die Herstellung von Harnstoffgruppen aufweisenden hochmolekularen Verbindungen durch Umsetzung von Polyisocyanaten ist beispielsweise aus DT-A-1 644 813 oder US-A-3 245 961 bekannt. Die gemäss diesen Vorveröffentlichungen zugänglichen Polyharnstoffe eignen sich in hervorragender Weise zur Herstellung von Überzügen und Beschichtungen. Durch die Verwendung von blockierten Polyisocyanaten anstelle der freien Isocyanate wird erreicht, dass die Reaktionsgemische eine den Anforderungen der Praxis genügende Verarbeitungszeit aufweisen. Demgegenüber wären entsprechende Reaktionsgemische aus den entsprechenden nichtblockierten Polyisocyanaten und den entsprechenden Polyaminen viel zu reaktiv um beispielsweise als Bindemittel in Zweikomponenten-Lacken eingesetzt werden zu können. Die durch die vorgenommene Blockierung der Isocyanatgruppen ermöglichte Erhöhung der Verarbeitungszeit muss bei den Systemen des genannten Standes der Technik jedoch mit dem Nachteil erkauft werden, dass die Systeme bei Raumtemperatur zu reaktionsträge sind um ein einwandfreies Durchhärten der mit ihnen hergestellten Lacküberzüge zu gewährleisten.

In der DE-A-2 722 514 werden sehr wirksame Katalysatoren für die genannte Umsetzung beschrieben. Die in dieser Vorveröffentlichung als Reaktionsbeschleuniger vorgeschlagenen Amidine sind jedoch mit dem Nachteil behaftet, nicht verseifungsstabil zu sein. Ihre Aktivität in modifizierten, praxisgerechten Mischungen geht bei längerer Lagerung verloren, so dass sie den Mischungen erst kurz vor deren Verwendung als Drittkomponente zugefügt werden müssen.

Es war daher die Aufgabe der vorliegenden Erfindung, Reaktionsbeschleuniger zur Verfügung zu stellen, die die Herstellung von Zweikomponenten-Beschichtungen auf der Basis von blockierten Polyisocyanaten und Polyaminen unter Vermeidung der Nachteile der verseifungsinstabilen Amidine gestatten.

Diese Aufgabe konnte überraschenderweise dadurch gelöst werden, dass als Beschleuniger für die genannte Umsetzung Verbindungen eingesetzt werden, die mindestens eine Guanidingruppe aufweisen. Insbesondere erlaubt das erfindungsgemässe Verfahren die Herstellung von lagerstabilen, modifizierten Mischungen, z.B. mit Steinkohlenteeren, mit den Anforderungen der Praxis gerecht werdenden Härtungszeiten bei Raumtemperatur.

Gegenstand der vorliegenden Erfindung ist ein Verfahren zur Herstellung von Polyharnstoffen durch Umsetzung von organischen Polyisocyanaten mit blockierten Isocyanatgruppen mit mindestens zwei primäre u./od. sekundäre Aminogruppen aufweisenden organischen Verbindungen in Gegenwart von die Kondensationsreaktion aus den genannten Ausgangsmaterialien beschleunigenden Katalysatoren, dadurch gekennzeichnet, dass man als Katalysatoren mindestens eine Guanidingruppierung der Formel

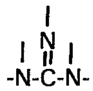

aufweisende Verbindungen verwendet.

Die Verwendung von Guanidin-Katalysatoren ist zwar bereits aus der DE-A-2 233 080 bekannt. Jedoch wird hier von nicht blockierten Polyisocyanaten ausgegangen, und es wird eine völlig verschiedene Aufgabe gelöst, nämlich die Angleichung der Reaktionsgeschwindigkeiten der Urethan- und der Harnstoffbildung bei der Herstellung von Urethan-Harnstoff-Schäumen.

Bei den erfindungsgemäss einzusetzenden Polyisocyanaten mit blockierten Isocyanatgruppen handelt es sich um beliebige, aus der Polyurethanchemie bekannte Polyisocyanate, deren Isocyanatgruppen mit beliebigen, in der Polyurethanchemie bekannten, Blockierungsmitteln verkappt sind. Vorzugsweise handelt es sich bei den erfindungsgemäss einzusetzenden blockierten Polyisocyanaten um lineare oder verzweigte Carbamidsäurearylestergruppen enthaltende Verbindungen des Molekulargewichtsbereichs 500 bis 10 000, deren Herstellung beispielsweise in DT-A-2 152 606 oder US-A-3 715 338 beschrieben ist. Diese an sich bekannten Carbamidsäurearylestergruppen enthaltenden Verbindungen werden entsprechend der Lehre der letztgenannten Vorveröffentlichungen vorzugsweise durch Umsetzung entsprechender Isocyanatgruppen enthaltender Polymerisations- oder Polykondensationsprodukte mit Phenol oder Phenolderivaten, vorzugsweise in stöchiometrischen Mengenverhältnissen, gegebenenfalls bei höheren Temperaturen und unter Verwendung der üblichen Katalysatoren, wie tertiäre Amine und/oder Zinnverbindungen, hergestellt. Die Isocyanatgruppen enthaltenden Polymerisations- oder Polykondensationsprodukte (Isocyanatprepolymere) lassen sich ihrerseits durch Umsetzung der entsprechenden Hydroxyl-, Amino- oder Sulfhydrylgruppen enthaltenden Polymerisations- oder Polykondensationsprodukte, wie vor-zugsweise der üblichen hydroxylgruppenhaltigen Polyäther, Polythioäther, Polyester, Polyacetale oder Polyesteramide mit Di- oder Polyisocyanaten, z.B. in einem NCO/OH-Verhältnis von 1,5 - 2,5 oder mit einem grossen Isocyanatüberschuss und anschliessende Entfernung des überschüssigen Isocyanats, z.B. durch Dünnschichtdestillation, herstellen. Hierbei werden im übrigen die in den zitierten Literaturstellen genannten aromatischen Diisocyanate bevorzugt eingesetzt, da erfindungsgemäss bevorzugt Carbamidsäurearylester mit aromatisch gebundenen Carbamidsäurearylestergruppen zum Einsatz gelangen.

Die nach bekannten Verfahren aus den genannten Komponenten hergestellten Isocyanatgruppen aufweisenden Polymerisations- oder Polykondensationsprodukte werden anschliessend in bekannter Reaktion vorzugsweise mit Phenolen, vorzugsweise in stöchiometrischen Mengen, zu Carbamidsäurearylestern umgesetzt. Diese Reaktion wird vorteilhaft bei höheren Temperaturen, vorzugsweise bei 50 bis 120°C und gegebenenfalls unter Verwendung der Isocyanat-Chemie gebräuchlichen Katalysatoren, wie z.B. tertiären Aminen und/oder Verbindungen des zwei- und vierwertigen Zinns durchgeführt.

Neben Phenol selbst sind eine grosse Anzahl substituierter Phenole für die Herstellung der Carbamidsäurearylester geeignet. Im einzelnen seien genannt: o-, m-, und p-Kresol, Kresolgemische, die isomeren Xylenole, 2-sek.-Butyl-phenol, 4-tert.-Butyl-phenol, 4-(1,13,3-Tetramethyl-butyl)-phenol, 4-Cyclohexylphenol, 4-Nonyl-phenol-Gemische mit verzweigten Nonylresten, Dodecylphenol-Gemische, wie sie z.B. durch Anlagerung entsprechender Olefine an Phenole in Gegenwart von Friedel-Crafts-Katalysatoren herstellbar sind.

Phenol bzw. Niedrigalkyl-substituierte ($C_1$-$C_3$) Phenole entweichen in der Regel aus den Verfahrensprodukten. Hierdurch kann möglicherweise eine Geruchsbelästigung sowie eine physiologische Gefährdung und ein nachteiliger Massenschwund bewirkt werden. Aus diesem Grunde ist es besonders bevorzugt, zur Herstellung der Carbamidsäurearylestergruppen aufweisenden Polymerisations- oder Polykondensationsprodukte solche Phenole anzuwenden, die durch $C_4$-$C_{18}$-Alkylreste substituiert sind.

Reaktionspartner für die Polyisocyanate mit blokkierten Isocyanatgruppen bei der erfindungsgemäss beschleunigten Umsetzung sind beliebige organische Verbindungen die mindestens zwei primäre und/oder sekundäre Aminogruppen aufweisen. Es sind hierunter insbesondere die auch zur Härtung von Polyepoxiden gebräuchlichen Aminogruppen enthaltenden Verbindungen zu verstehen, z.B. aliphatische, cycloaliphatische oder heterocyclische Polyamine bzw. Polyamidoamine. Bevorzugte aliphatische Polyamine sind Alkylenpolyamine der Formel

$$H_2N\,(RNH)_nH$$

in welcher R für einen zweiwertigen aliphatischen Kohlenwasserstoffrest mit 2 bis 18, vorzugsweise 2 bis 6 oder einen cycloaliphatischen Kohlenwasserstoffrest mit 6 - 15, vorzugsweise 13 - 15, Kohlenstoffatomen steht und n eine ganze Zahl von 1 bis 6, vorzugsweise 1, bedeutet. Die genannten cycloaliphatischen Polyamine sind ihrerseits gegenüber den aliphatischen bevorzugt.

Als Beispiele für geeignete Polyamine können genannt werden: Äthylendiamin, Diäthylentriamin, Hexamethylendiamin und Trimethylhexamethylendiamin. Diprimäre cycloaliphatische Amine, wie z.B. 1,4-Diaminocyclohexan, 3,3'-Dimethyl-4,4'-diaminodicyclohexylmethan sowie 3,3,5-Trimethyl-5-aminomethyl-cyclohexylamin (Isophorondiamin) sind für dieses Verfahren besonders geeignet. Andere Härter mit mehreren Aminowasserstoffatomen sind Polyamide einer aliphatischen bzw. cycloaliphatischen Polycarbonsäure mit einem aliphatischen Amin, wie z.B. das Umsetzungsprodukt von nach Diels Alder dimerisierter Linolensäure mit Diäthylentriamin im Molverhältnis 1 : 2.

Zur Herstellung der gebrauchsfertigen Mischung wird die Polyisocyanat-Komponente mit blockierten Isocyanatgruppen mit dem Polyamin und dem erfindungswesentlichen Katalysator vermischt. Im allgemeinen werden die Mengenverhältnisse der Reaktionspartner so gewählt, dass pro Val blockierter Isocyanatgruppen 0,8 - 1,2, vorzugsweise 1 Val primärer und/oder sekundärer Aminogruppen im Reaktionsgemisch vorliegt. Die Aushärtung der Mischung, d.h. die Herstellung der Polyharnstoffe erfolgt im allgemeinen im Temperaturbereich von —10 bis +150°C, vorzugsweise +5 bis 60°C und insbesondere zwischen 15 und 35°C.

Die erfindungswesentlichen Katalysatoren werden im allgemeinen in Mengen von 0,05 - 10 vorzugsweise 0,1 - 5 Gewichtsprozent bezogen auf die Gesamtmenge der genannten Reaktionspartner eingesetzt.

Bei den erfindungswesentlichen Reaktionsbeschleunigern handelt es sich um beliebige organische Verbindungen, die mindestens eine Guanidingruppierung der Formel

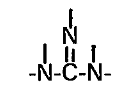

aufweisen.

Vorzugsweise entsprechen die erfindungsgemäss zu verwendenden Beschleuniger der Formel

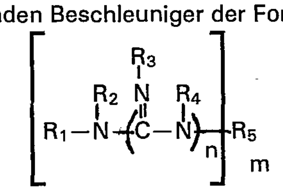 (I)

in welcher

m für 1 oder 2 steht,

n im Falle von m = 1 für 1, 2 oder 3 und im Falle von m = 2 für 1 steht,

$R_1$, $R_2$, $R_3$ und $R_4$ für gleiche oder verschiedene Reste stehen und Wasserstoff, Alkyl-, Cycloalkyl-, Aralkyl-, Alkaryl oder Arylreste bedeuten, welche gegebenenfalls inerte Substituenten aufweisen und/oder durch Struktureinheiten der Formeln -O-, -S- oder =N-$R_6$ ($R_6$ = $C_1$-$C_4$-Alkyl oder Phenyl) unterbrochen sind, und

$R_5$ entweder für einen einwertigen Rest der bei der Definition von $R_1$ bis $R_4$ genannten Art oder einen Alkylenrest mit 2 bis 4 Kohlenstoffatomen steht, wobei im Falle von n = 1 jeweils 2 der Reste $R_1$, $R_2$, $R_3$, $R_4$ und $R_5$ miteinander auch cyclisch verknüpft sein können, so dass Guanidine der nachfolgenden Strukturen entstehen:

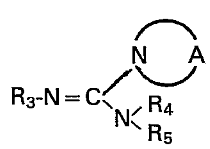

Ia

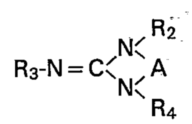

Ib

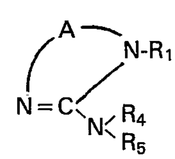

Ic

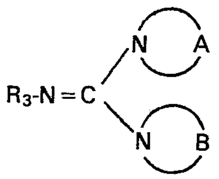

Id

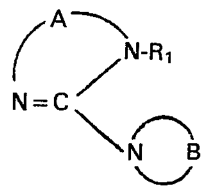

Ie

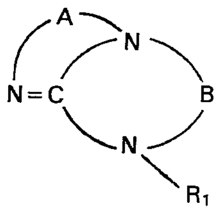

If

in welchen A und B mindestens zweigliedrige bivalente, aliphatische, cycloaliphatische, araliphatische oder aromatische Kohlenstoffketten bedeuten, die entsprechend den oben gemachten Ausführungen auch durch Heteroatome unterbrochen und/oder substituiert sein können.

Besonders bevorzugt werden beim erfindungsgemässen Verfahren solche Verbindungen der genannten Formeln (I), (Ia bis If) eingesetzt, für welche

m und n jeweils für 1 stehen,

$R_1$, $R_2$, $R_3$, $R_4$ und $R_5$ für gleiche oder verschiedene Reste stehen und Wasserstoff, gegebenenfalls Nitrilgruppen als Substituenten aufweisende aliphatische Kohlenwasserstoffreste mit 1 bis 18, insbesondere 1 bis 4 Kohlenstoffatomen, cycloaliphatische Kohlenwasserstoffreste mit 5 bis 10, insbesondere 5 bis 6 Kohlenstoffatomen, araliphatische Kohlenwasserstoffreste mit 7 bis 15, insbesondere 7 bis 8 Kohlenstoffatomen oder aromatische Kohlenwasserstoffatome mit 6 bis 14, insbesondere 6 Kohlenstoffatomen bedeuten, und

A und B für gleiche oder verschiedene Polymethylenreste mit 2 bis 15, insbesondere 2 bis 4 Kohlenstoffatomen stehen, die auch durch Heteroatome wie -O-, -S- oder $=N-R_6$ ($R_6$ = $C_1$-$C_4$-Alkyl oder Phenyl) unterbrochen sein können.

Erfindungsgemäss als Beschleuniger ebenfalls geeignet, jedoch weniger bevorzugt sind solche Verbindungen der genannten allgemeinen Formeln (I) und (Ia - If) für welche die Reste $R_1$ - $R_5$ und A - B Substituenten wie Halogen-, Hydroxy-, Amino-, $C_1$-$C_4$-Alkyl-amino-, Di-($C_1$-$C_4$-alkyl)-amino-, $C_1$-$C_4$-Alkoxy-, Phenoxy-, $C_1$-$C_4$-Alkyl-mercapto-, $C_1$-$C_4$-Alkoxycarbonyl- oder Nitroreste aufweisen.

Zu den bevorzugten erfindungsgemässen Reaktionsbedingungen zählen ebenfalls Biguanid- oder Triguanid-Verbindungen der Formel

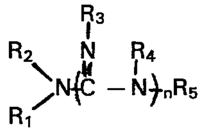

(II)

in welcher

n für 2 oder 3 steht und

$R_1$, $R_2$, $R_3$, $R_4$ und $R_5$ die bereits obengenannte Bedeutung, insbesondere die bereits obengenannte bevorzugte Bedeutung haben.

Selbstverständlich können beim erfindungsgemässen Verfahren auch Verbindungen eingesetzt werden, die mehr als eine Guanidingruppierung aufweisen, d.h. solche Verbindungen der obengenannten Formel (I), für welche m für 2 steht, $R_1$, $R_2$, $R_3$ und $R_4$ die bereits genannte Bedeutung haben und $R_5$ für einen zweiwertigen Kohlenwasserstoffrest, insbesondere einen Polymethylenrest mit 2 bis 4 Kohlenstoffatomen steht.

Die Aktivität der erfindungsgemäss zu verwendenden Katalysatoren kann in weiten Bereichen variiert werden. Je nach Wahl der Reste $R^1$, $R^2$, $R^3$, $R^4$, $R^5$, A und B (aliphatischer oder aromatischer Charakter) sowie der Ringgrösse und des Verzweigungsgrades können Katalysatoren mit abgestufter Basizität und Aktivität den Bedürfnissen der Praxis angepasst werden.

Die erfindungsgemäss verwendeten Katalysatoren sind bekannt oder können nach bekannten Verfahren hergestellt werden. Vgl. hierzu beispielsweise: Houben-Weyl, Methoden der organischen Chemie. Bd. 8 Sauerstoffverb. III, S. 94 - 95, 98 - 100, 172 - 194; Ber. *97*, (1969); US-PS 3 923 808; Can. J. Chem. *35*, 843 - 9 (1957); Can. J. Chem. *35*, 9 - 14 (1957).

Die erfindungsgemässen Katalysatoren umfassen z.B. folgende Guanidin-Verbindungen:

Guanidin sowie Biguanid oder Triguanid und gegebenenfalls gemischte N,N,N',N',N''-Mono- bis Penta-Methyl-, Ethyl-, (Iso)propyl-, (Iso)butyl-, (Iso)pentyl-, Hexyl-, 2-Ethylhexyl-, Heptyl-, Octyl-, Dodecyl-, Stearyl-, Hydroxymethyl-, Hydroxyethyl-, Hydroxypentyl-, Hydroxyethoxyethyl-, Hydroxyethylmercaptoethyl-, Ethoxypropyl-, Butoxyhexyl-, Cyanoethyl-, Cyanopentyl-, Butoxycarbonylmethyl-, Methoxycarbonylhexyl-, Dimethylaminopropyl-, Cyclopentyl-, Cyclohexyl-, Benzyl-, Chlorbenzyl-, Phenethyl-, Phenpropyl-, Dimethylaminophenethyl-, Phenyl-, Chlorphenyl-, Tolyl-, (tert.)-Butylphenyl-, Methoxyphenyl-, Ethoxycarbonylphenyl-guanidine bzw. auch -biguanide oder -triguanide, -2-amino-imidazoline, -2-aminotetrahydropyrimidine, -2-amino-tetrahydro-1,3-diazepine, Methylimino-,Ethylimino-, Cyanethylimino-, Dibutylaminobutylimino-, Hexylimino-, Stearylimino-, Cyclohexylimino-, Benzylimino-, Phenethylimino-, Phenylimino-, Chlorphenylimino-, Tolylimino-*kohlensäure*-bismorpholid, -bispiperidid, -bishexamethylenimid, -bis-N'-methylpiperazid, N-Methyl-, N-Ethyl-, N-(Iso)-propyl-, N-(Iso-butyl)-, N-(Iso)-pentyl-, N-Hexyl-, N-Heptyl-, N-Decyl-, N-Dodecyl-, N-Stearyl-, N-Allyl-, N-Hexenyl-, N-Hydroxyethyl-, N-Hydroxyoctyl-, N-[(Poly)-(Hydroxyethoxy)-ethyl]-, N-[(Poly)-(Hydroxypropoxy)-propyl]-, N-Methoxypropyl-, N-Cyanomethyl-, N-Cyanoethyl-, N-Cyanopentyl-, N-Methoxycarbonylmethyl-, N-Ethoxycarbonylethyl-, N-Aminoethyl-, N-Ethylaminopropyl-, N-Diethylamino-butyl-, N-Cyclopentyl-, N-Cyclohexyl-, N-Benzyl-, N-Phenethyl-, N-Phenyl-, N-Tolyl-, N-Chlorphenyl-, N-Dimethylaminophenyl-, N-Meth-

oxyphenyl-tetrahydro-1H-imidazo[1,2-a]imidazol, -Methyl-tetrahydro-1H-imidazo[1,2-a]-imidazol, -dimethyl-tetrahydro-1H-imidazo[1,2-a]-imidazol, -Hexahydro-2H-pyrimido[1,2-a]-pyrimidin, -hexahydro-imidazo[1,2-a]-pyrimidin, -tetrahydro-imidazo[1,2-a]-pyrimidin, -dihydro-imidazo[1,2-a]-benz-pyrimidin, -dihydro-benzamid-azo-[1,2-a]-pyrimidin, -hexahydro-imidazo[1,2-a]-diazepin, -octahydro-pyrimido[1,2-a]-diazepin, -octahydro-diazepino[1,2-a]-diazepin.

Selbstverständlich können anstelle der Guanidine als solcher auch Guanidinbildner eingesetzt werden, d.h. Verbindungen, die mit den zur Härtung verwendeten Polyaminen der Formel zu Guanidinen reagieren können. Hierzu zählen u.a. insbesondere Cyanamid sowie Carbodiimide wie z.B. Dicyclohexylcarbodiimid. Im Falle der Verwendung derartiger «Guanidinbildner» empfiehlt es sich, die beim erfindungsgemässen Verfahren einzusetzenden Polyamine mit dem «Guanidinbildner» vorab unter Bildung eines Gemischs aus überschüssigem Polyamin und Guaninverbindung zur Reaktion zu bringen.

Die erfindungswesentlichen Katalysatoren können beim erfindungsgemässen Verfahren auch in Form ihrer Addukte (Salze) mit anorganischen oder organischen Säuren zum Einsatz gelangen, obwohl diese Ausführungsform weniger bevorzugt ist. Zur Salzbildung geeignete Säuren sind insbesondere schwache. d.h. einen über 2,5 liegenden pKa-Wert aufweisende Säuren wie z.B. Essigsäure oder Benzoesäure.

Zur Herstellung der gebrauchsfertigen Mischungen unter erfindungsgemässer Verwendung der Guanidinkatalysatoren können neben den bereits genannten Reaktionspartnern und Katalysatoren weitere Bestandteile mitverwendet werden. So kann beispielsweise die Härte der Umsetzungsprodukte durch Mitverwendung von Epoxidharzen erhöht werden. Weiterhin können die Eigenschaften der Umsetzungsprodukte durch Mitverwendung von Füllstoffen, wie z.B. Kaolin, Kreide oder Schwerspat; Pigmenten, wie z.B. Titandioxid; Lösungsmitteln, wie z.B. Toluol, Xylol, Butylacetat, Ethylenglykolmonomethyletheracetat; Weichmacher, wie z.B. Dioctylphthalat, Verdickungsmitteln, sowie Streckmitteln, wie z.B. Steinkohlenteer oder Bitumenölen modifiziert werden.

Die durch die erfindungsgemässe Verwendung bezüglich ihrer Reaktivität beschleunigten Gemische eignen sich insbesondere zur Herstellung von Überzügen und Giessharzen, bei denen es auf besondere Elastizität ankommt. Es lassen sich z.B. Dachbeschichtungen, Fussbodenbeläge und Abformmassen herstellen. Als Korrosionsschutzbeläge auf Stahl werden Kombinationen mit Epoxidharz bevorzugt, die sich durch gute Elastizität und Haftfestigkeit auszeichnen.

Die Massnahmen und Verfahrensprodukte der Beispiele 1, 2, 3, 5, 7 und 9 gehören zum Stand der Technik.

*Beispiel 1*

Herstellung eines trifunktionellen Polyethers mit endständigen Carbamidsäure-(4-nonylphenylester)-gruppen:

1000 g eines trifunktionellen Polypropylenglykols der OH-Zahl 56, welches nach bekannten Verfahren durch anionische Polymerisation von Propylenoxid mit 1,1,1-Trimethylolpropan bzw. dessen Natriumalkoholat als Startkomponenten erhalten wird, und 150 g Toluylendiisocyanat-(2,4) werden bei 20 bis 25°C gemischt. Die Mischung wird 5 Stunden unter Rühren auf 70°C erhitzt, wonach sie einen NCO-Gehalt von 3 Gewichtsprozent aufweist. Zum auf 20 - 25°C abgekühlten Polyisocyanatprepolymer werden 5 g Dibutylzinndilaurat und 190 g eines technischen 4-Nonylphenol-Gemisches mit verzweigten Nonylresten gegeben. Anschliessend wird weitere 4 Stunden unter Rühren auf 70°C erhitzt. Das Produkt erhält danach praktisch kein Isocyanat und hat ein Äquivalent von ungefähr 1630.

*Beispiel 2*

Herstellung eines bifunktionellen Polyethers mit endständigen Carbamidsäure-phenylester-gruppen:

1000 g eines bifunktionellen Polypropylenglykols der OH-Zahl 31, welches nach bekannten Verfahren erhalten wird, und 96,7 g Toluylendiisocyanat-(2,4) werden bei 20 - 25°C gemischt. Die Mischung wird 5 Stunden unter Rühren auf 70°C erhitzt. Zum auf 20 - 25°C abgekühlten Polyisocyanatprepolymer werden 50 Dibutylzinndilaurat und 52 g Phenol gegeben. Anschliessend wird weitere 4 Stunden unter Rühren auf 70°C erhitzt. Das Produkt enthält danach praktisch kein Isocyanat und hat ein Äquivalentgewicht von ungefähr 2400.

*Beispiel 3*

Herstellung eines härtbaren Gemisches aus dem Carbamidsäureestergruppen enthaltenden Produkt entsprechend Beispiel 1 und Polyamin.

100 g eines Produktes gemäss Beispiel 1 werden mit 6 g 3,3'-Dimethyl-4,4'-diaminodicyclohexylmethan gemischt. Das erhaltene Reaktionsgemisch hat eine Verarbeitungszeit von ca. 4 Stunden und eine Trocknungszeit von ca. 17 Stunden. Die mechanischen Eigenschaften des Endproduktes werden durch folgende Werte charakterisiert:

| | | |
|---|---|---|
| Shore-Härte A | nach DIN 53 505 | 73 |
| Reissfestigkeit | nach DIN 53 455 in MPa | 3,77 |
| Reissdehnung | nach DIN 53 455 in % | 308 |
| Weiterreiss-festigkeit | nach DIN 53 515 in kN/m | 11,75 |

*Beispiel 4*

Beschleunigung der Reaktionsgemische durch die erfindungsgemässen Katalysatoren bei 23°C.

Die Verarbeitungs- und Härtungszeit von Gemischen nach Beispiel 3 wurde nach Zusatz der in nachstehender Tabelle aufgeführten Katalysatoren wie folgt ermittelt:

| Katalysator | | Zusatzmenge in g | Verarbeitungszeit in Min. | Trocknungszeit in Min. |
|---|---|---|---|---|
| A | 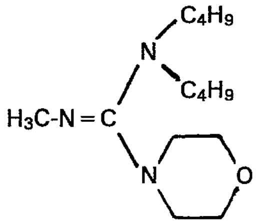 | 2 | 9 | 25 |
| B | 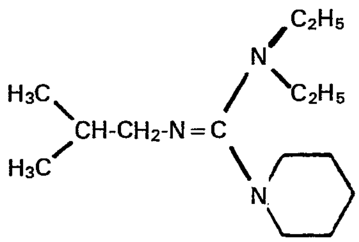 | 2 | 3 | 420 |
| | | 4 | 1 | 420 |
| C | 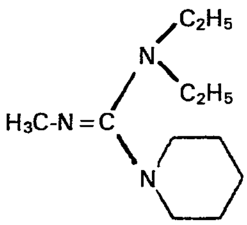 | 2 | 2 | 240 |
| | | 4 | 1 | 140 |
| D | 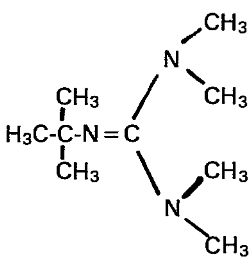 | 2 | 1 | 25 |
| | | 4 | 1 | 120 |
| E | 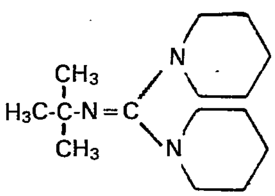 | 2 | 1 | 40 |
| | | 4 | 1 | 300 |
| F | 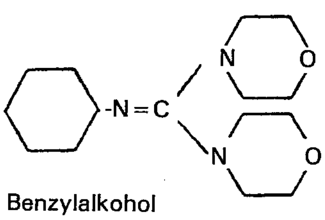 | 4 | 22 | 135 |
| | 50%ig in Benzylalkohol | 8 | 11 | 75 |
| G | 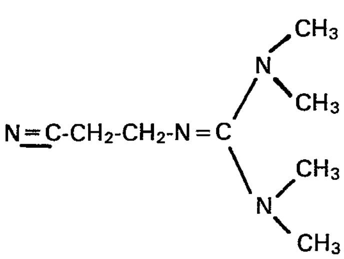 | 2 | 8 | 40 |
| | | 4 | 4 | 45 |

| Katalysator | | Zusatzmenge in g | Verarbeitungszeit in Min. | Trocknungszeit in Min. |
|---|---|---|---|---|
| H | 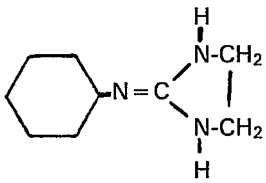 | 2 | 4 | 45 |
| | | 4 | 2 | 15 |
| I | 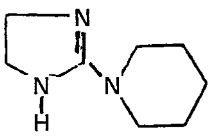 | 4 | 5 | 35 |
| | 50%ig im Ethanol | 8 | 3 | 35 |
| K | 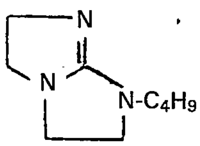 | 2 | 50 | 300 |
| | | 4 | 17 | 210 |
| L | 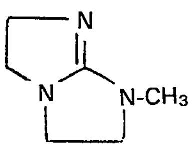 | 2 | 30 | 150 |
| | | 4 | 8 | 100 |
| M | 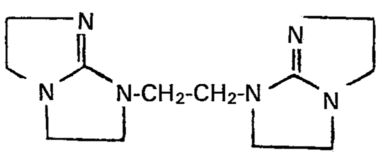 | 2 | 45 | 270 |
| | | 4 | 18 | 420 |
| N | 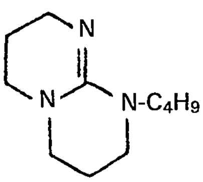 | 2 | 1 | 8 |
| | | 4 | 1 | 400 |
| O | 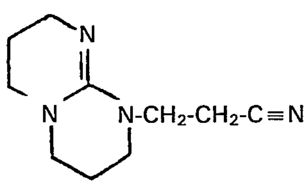 | 2 | 3 | 15 |
| | | 4 | 1 | 60 |

| Katalysator | | Zusatzmenge in g | Verarbeitungszeit in Min. | Trocknungszeit in Min. |
|---|---|---|---|---|
| P | 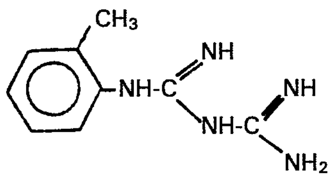 | 2 | 4 | 180 |
| | | 4 | 9 | 240 |
| Q | 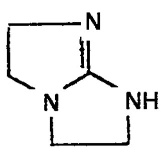 · $CH_3COOH$ | 2 | 110 | 500 |

*Beispiel 5*

Herstellung eines härtbaren Gemisches aus dem Carbamidsäureestergruppen enthaltenden Produkt entsprechend Beispiel 1 und Polyamin/Steinkohlenteer.

60 g eines Produktes gemäss Beispiel 1 werden mit 40 g eines handelsüblichen Alkansulfonsäurearylester-Weichmachers homogen vermischt. Die Härtung dieser Mischung erfolgt mit einem Gemisch aus 3,6 g 3,3'-Dimethyl-4,4'-diaminodicyclohexylmethan und 46,4 g eines handelsüblichen flüssigen Steinkohlenteers. Die Reaktivität des Reaktionsgemisches wird durch die isotherme Viskositätsänderung während 30 Minuten ermittelt.

| Reaktionszeit in Min. | Viskosität in mPa.s bei 20°C |
|---|---|
| 5 | 13440 |
| 15 | 13680 |
| 25 | 14040 |
| 30 | 14160 |

*Beispiel 6*

Reaktionsbeschleunigung des härtbaren Gemisches entsprechend Beispiel 5 insbesondere nach längerer Lagerung.

I. Durch Austausch von 2 g flüssigen Steinkohlenteers gegen 2 g des Katalysators L aus Beispiel 4 in einem Reaktionsgemisch entsprechend Beispiel 5 konnte eine deutliche Beschleunigung der Reaktion festgestellt werden.

Isotherme Viskositätsänderung

| Reaktionszeit in Min. | Viskosität in mPa.s bei 20°C |
|---|---|
| 5 | 12960 |
| 15 | 17280 |
| 25 | 23160 |
| 30 | 27120 |

Diese Reaktionsbeschleunigung blieb auch nach Lagerung der beiden Reaktionskomponenten während 28 Tagen bei 50°C erhalten.

Isotherme Viskositätsänderung

| Reaktionszeit in Min. | Viskosität in mPa.s bei 20°C |
|---|---|
| 5 | 13440 |
| 15 | 19680 |
| 25 | 26640 |
| 30 | 30720 |

II. Durch Austausch von 1 g flüssigen Steinkohlenteers gegen 1 g des Katalysators P aus Beispiel 4 in einem Reaktionsgemisch entsprechend Beispiel 5 konnte ebenfalls eine deutliche Steigerung der Reaktionsgeschwindigkeit ermittelt werden.

Isotherme Viskositätsänderung

| Reaktionszeit in Min. | Viskosität in mPa.s bei 20°C |
|---|---|
| 5 | 12840 |
| 15 | 16320 |
| 25 | 19200 |
| 30 | 20880 |

Durch 28tägige Lagerung der beiden Reaktionskomponenten bei 50°C konnte keine Beeinträchtigung hinsichtlich der Aktivität des Katalysators festgestellt werden.

Isotherme Viskositätsänderung

| Reaktionszeit in Min. | Viskosität in mPa.s bei 20°C |
|---|---|
| 5 | 15720 |
| 15 | 21120 |
| 25 | 27360 |
| 30 | 30720 |

*Beispiel 7*

Herstellung eines härtbaren Gemisches aus dem Carbamidsäureestergruppen enthaltenden Produkt gemäss Beispiel 2 und Polyamin.

100 g eines Produktes gemäss Beispiel 2 werden mit 25 g Trioctylphosphat und 5 g 3,3'-Dimethyl-4,4'-diaminodicyclohexylmethan vermischt. Das erhaltene Reaktionsgemisch hat eine Härtungszeit von 7 Stunden.

*Beispiel 8*

Beschleunigung des Reaktionsgemisches entsprechend Beispiel 7.

Ein Reaktionsgemisch entsprechend Beispiel 7 wurde beschleunigt mit a) 1 g des Katalysators L aus Beispiel 4 und b) 1 g des Katalysators P aus Beispiel 4 versetzt. Hierdurch konnte eine Verkürzung der Härtungszeit auf 2,5 Stunden und b) 2 Stunden erzielt werden.

*Beispiel 9*

Herstellung einer füllstoff- und weichmacherhaltigen Formmasse.

60 g eines Produktes gemäss Beispiel 1 werden mit 40 g eines handelsüblichen Sulfonsäureesterweichmachers, 40 g Kaolin und 5 g Titandioxid-Pigment gemischt und abgerieben. Die Härtung dieser Mischung erfolgt mit einem Gemisch aus 3,6 g 3,3'-Dimethyl-4,4'-diaminodicyclohexylmethan und 6,4 g des genannten Weichmachers. Das erhaltene Reaktionsgemisch hat eine Verarbeitungszeit von ca. 9 Stunden und eine Trocknungszeit von ca. 35 Stunden.

An dem elastischen Endprodukt wurden folgende mechanische Eigenschaften ermittelt:

| | | |
|---|---|---|
| Shore-Härte A | nach DIN 53 505 | 52 |
| Reissfestigkeit | nach DIN 53 455 in MPa | 1,6 |
| Reissdehnung | nach DIN 43 455 in % | 180 |
| Weiterreiss-festigkeit | nach DIN 53 515 in kN/m | 9,3 |

*Beispiel 10*

Beschleunigung des Reaktionsgemisches entsprechend Beispiel 9 durch Zusatz des Katalysators P aus Beispiel 4.

Durch Zusatz von 2 g des Katalysators P aus Beispiel 4 konnte bei einer Verarbeitungszeit auf ca. 45 Minuten und die Trocknungszeit auf ca. 3 Stunden verkürzt werden. Die an dem elastischen Endprodukt ermittelten mechanischen Eigenschaften entsprechen weitgehend denen des Produktes aus Beispiel 9, d.h. Beeinflussungen der mechanischen Eigenschaften erfolgen nicht durch Zusatz des Katalysators.

**Patentansprüche**

1. Verfahren zur Herstellung von Polyharnstoffen durch Umsetzung von organischen Polyisocyanaten mit blockierten Isocyanatgruppen mit mindestens zwei primäre und/oder sekundäre Aminogruppen aufweisenden organischen Verbindungen in Gegenwart von die Kondensationsreaktion aus den genannten Ausgangsmaterialien beschleunigenden Katalysatoren, dadurch gekennzeichnet, dass man als Katalysatoren mindestens eine Guanidingruppierung der Formel

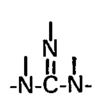

aufweisende Verbindungen verwendet.

2. Verfahren gemäss Anspruch 1, dadurch gekennzeichnet, dass man als Katalysatoren Verbindungen der Formel

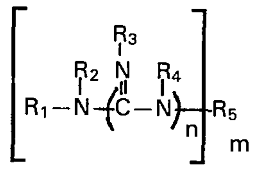

verwendet, wobei

m für 1 oder 2 steht,

n im Falle von m = 1 für 1, 2 oder 3 und im Falle von m = 2 für 1 steht,

$R_1$, $R_2$, $R_3$ und $R_4$ für gleiche oder verschiedene Reste stehen und Wasserstoff, Alkyl-, Cycloalkyl-, Aralkyl-, Alkaryl oder Arylreste bedeuten, welche gegebenenfalls inerte Substituenten aufweisen und/oder durch Struktureinheiten der Formeln -O-, -S- oder $=N-R_6$ ($R_6$ = $C_1$-$C_4$-Alkyl oder Phenyl) unterbrochen sind, und

$R_5$ entweder für einen einwertigen Rest der bei der Definition von $R_1$ bis $R_4$ genannten Art oder einen Alkylenrest mit 2 bis 4 Kohlenstoffatomen steht, wobei im Falle von n = 1 jeweils 2 der Reste $R_1$, $R_2$, $R_3$, $R_4$ und $R_5$ miteinander auch cyclisch verknüpft sein können.

3. Verfahren gemäss Anspruch 1 und 2, dadurch gekennzeichnet, dass man die Guanidinverbindungen in Form ihrer Salze mit anorganischen oder organischen Säuren verwendet.

**Claims**

1. Process for the production of polyureas by reacting organic polyisocyanates containing blocked isocyanate groups with organic compounds containing at least two primary and/or secondary amino groups in the presence of catalysts which accelerate the condensation reaction of the above-mentioned starting materials, characterised in that compounds containing at least one guanidine group of the formula

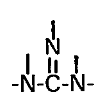

are used as catalysts.

2. Process according to claim 1, characterised in that the catalysts used are compounds of the formula

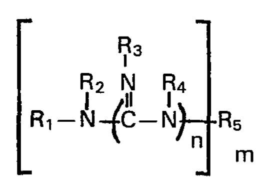

wherein

m represents 1 or 2,

n represents 1, or 2 or 3 when m = 1 and n represents 1 when m = 2

$R_1$, $R_2$, $R_3$ and $R_4$ represent identical or different radicals and denote hydrogen, alkyl, cycloalkyl, aralkyl, alkaryl or aryl radicals which optionally contain inert substituents and/or are interrupted by structural units of the formulae -O-, -S- or $=N-R_6$ ($R_6$ = $C_1$-$C_4$ alkyl or phenyl), and

$R_5$ represents either a monofunctional radical of the type mentioned in the definition of $R_1$ to $R_4$ or an alkylene radical containing 2 to 4 carbon atoms; when n = 1 it is also possible for two of the radicals $R_1$, $R_2$, $R_3$, $R_4$ and $R_5$ to be cyclically attached to one another.

3. Process according to claim 1 and 2, characterised in that the guanidine compounds are used in the form of their salts with inorganic or organic acids.

**Revendications**

1. Procédé de production de polyurées par réaction de polyisocyanates organiques avec des groupes isocyanate protégés avec des composés organiques présentant au moins deux groupes amino primaires et/ou secondaires en présence de catalyseurs accélérant la réaction de condensation à partir des matières de départ, caractérisé en ce qu'on utilise comme catalyseurs des composés portant au moins un groupement guanidine de formule

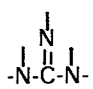

2. Procédé suivant la revendication 1, caractérisé en ce qu'on utilise comme catalyseurs des composés de formule

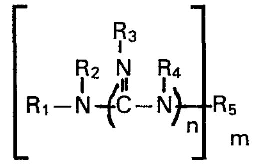

dans laquelle

m est égal à 1 ou 2,

n est égal à 1, 2 ou 3 lorsque m est égal à 1, et il est égal à 1 lorsque m est égal à 2,

$R_1$, $R_2$, $R_3$ et $R_4$ représentent des restes égaux ou différents et désignent l'hydrogène ou des restes alkyle, cycloalkyle, aralkyle, alkaryle ou aryle qui présentent le cas échéant des substituants inertes et/ou qui sont interrompus par les unités structurales de formules -O-, -S- ou $=N-R_6$ ($R_6$ = alkyle en $C_1$ à $C_4$ ou phényle) et

$R_5$ représente un reste monovalent du type mentionné pour la définition de $R_1$ à $R_4$ ou un reste alkylène ayant 2 à 4 atomes de carbone,

et au cas où n est égal à 1, deux des restes $R_1$, $R_2$, $R_3$, $R_4$ et $R_5$ peuvent s'associer également en une liaison cyclique.

3. Procédé suivant les revendications 1 et 2, caractérisé en ce qu'on utilise les composés de guanidine sous la forme de leurs sels avec des acides inorganiques ou organiques.